# EUROPÄISCHE PATENTSCHRIFT

(11) **EP 2 637 904 B1**
(45) Veröffentlichungstag und Bekanntmachung des Hinweises auf die Patenterteilung: **01.07.2015**
(21) Anmeldenummer: 11771144.0
(22) Anmeldetag: 19.10.2011
(51) Int. Cl.: B60R 25/02, B62D 5/04

(54) **LENKVORRICHTUNG FÜR EIN KRAFTFAHRZEUG UND VERFAHREN ZUM SPERREN EINER LENKVORRICHTUNG**
STEERING FOR A VEHICLE AND METHOD FOR LOCKING IT
DIRECTION POUR VÉHICULE ET PROCÉDÉ POUR SON BLOCAGE

(30) Priorität: 08.11.2010 DE 102010043533
(43) Veröffentlichungstag der Anmeldung: 18.09.2013
(73) Patentinhaber: Robert Bosch GmbH, 70442 Stuttgart (DE)
(72) Erfinder: DIEROLF, Simon, 73230 Kirchheim/Teck (DE); SADER, Frank, 70372 Stuttgart (DE); XU, Min, 70435 Stuttgart (DE)
(86) Internationale Anmeldenummer: PCT/EP2011/068251
(87) Internationale Veröffentlichungsnummer: WO 2012/062548

(56) Entgegenhaltungen:
- EP-A1- 1 234 734
- EP-A1- 1 308 356
- DE-A1- 10 151 010
- DE-A1- 19 601 827
- DE-A1-102006 056 042
- FR-A1- 2 793 749

## Beschreibung

### Stand der Technik

Die Erfindung betrifft eine Lenkvorrichtung für ein Kraftfahrzeug, insbesondere eine Servolenkung. Die Lenkvorrichtung weist einen elektrischen Antrieb auf, welcher ausgebildet ist, ein Drehmoment zum Erleichtern eines Lenkens des Kraftfahrzeugs zu erzeugen.

Bei aus dem Stand der Technik bekannten Lenkvorrichtungen, welche ein Lenkradschloss aufweisen, wird die Lenkvorrichtung von dem Lenkschloss verriegelt, wenn das Lenkrad von einem Fahrer des Fahrzeugs gedreht wird. Das Lenkrad lässt sich nach einem Verriegeln des Lenkschlosses nicht mehr weiter drehen. Das Fahrzeug ist dadurch vor einem Diebstahl gesichert.

Aus der DE 196 01 827 A1 der Anmelderin ist eine Lenkvorrichtung nach dem Oberbegriff des Anspruchs 1 bekannt, bei der zum Sperren der Lenkvorrichtung ein Lenkrad in eine Sperrposition gefahren werden kann und ein Rotorwinkel eines mit dem Lenkrad verbundenen Elektromotors gespeichert werden kann. Die Lenkvorrichtung ist ausgebildet, das Lenkrad bei einem Wiederstart eines die Lenkvorrichtung aufweisenden Fahrzeuges von dem Elektromotor in die Lenkradposition vor dem Sperren zurückzudrehen.

Aus der FR 2 793 749 ist eine Lenksperre einer Servolenkung mit einem Elektromotor bekannt, bei der zum Sperren der Servolenkung ein Sperrbolzen in eine mit einer Rotorwelle eines Rotors des Elektromotors drehfest verbundene Lochscheibe formschlüssig eingreifen kann.

### Offenbarung der Erfindung

Erfindungsgemäß weist eine Lenkvorrichtung die Merkmale des Anspruchs 1 auf. Die Lenkvorrichtung weist ein insbesondere elektrisches Lenkschloss auf, welches ausgebildet ist, in wenigstens einer Rotorposition des Rotors in den Antrieb formschlüssig und/oder kraftschlüssig einzugreifen und ein Lenkbewegen zu sperren oder freizugeben. Die Lenkvorrichtung weist auch eine Steuereinheit und einen Speicher für wenigstens einen die Rotorposition repräsentierenden Rotorpositionsdatensatz auf. Die Lenkvorrichtung ist ausgebildet, zum Sperren der Lenkvorrichtung mittels der Steuereinheit den Elektromotor anzusteuern und den Rotor in die Rotorposition zu drehen, welche einem im Speicher vorrätig gehaltenen Rotorpositionsdatensatz entspricht und den Rotor dort zu sperren.

So kann vorteilhaft eine selbstverriegelnde Wegfahrsperre gebildet sein. Die selbstverriegelnde Wegfahrsperre bewirkt vorteilhaft, dass zum Verriegeln der Wegfahrsperre des Kraftfahrzeugs das Lenkrad vorteilhaft nicht mehr von einem Fahrer des Fahrzeugs in eine Sperrposition gedreht werden muss.

In einer bevorzugten Ausführungsform weist der Elektromotor einen Rotorpositionssensor auf, wobei der Rotorpositionssensor ausgebildet ist, eine Wnkelstellung des Rotors zu erfassen und ein die Rotorposition repräsentierendes Rotorpositionssignal zu erzeugen. Der Elektromotor weist eine Steuereinheit auf, wobei die Steuereinheit ausgebildet ist, den Elektromotor, insbesondere einen Stator des Elektromotors, zum Erzeugen eines magnetischen Drehfeldes in Abhängigkeit des Rotorpositionssignals anzusteuern.

Die Steuereinheit der Lenkvorrichtung ist mit der Steuereinheit des Elektromotors verbunden. Die Steuereinheit der Lenkvorrichtung ist ausgebildet, die Rotorposition zum Sperren wenigstens in Abhängigkeit des Rotorpositionssignals zu ermitteln.

Bevorzugt sind die Steuereinheit des Elektromotors und die Steuereinheit der Lenkvorrichtung durch eine gemeinsame Steuereinheit gebildet. Durch die Verbindung der Steuereinheit der Lenkvorrichtung mit der Steuereinheit des Elektromotors kann vorteilhaft eine in dem Elektromotor vorhandene Rotorpositionsermittlung zum Sperren des Antriebs verwendet werden. So braucht die Lenkvorrichtung vorteilhaft keine für das Sperren des Antriebs, insbesondere des Rotors gesondert vorgesehenen Rotorpositionssensoren, beispielsweise eine Lichtschranke, aufzuweisen. Bevorzugt ist die Steuereinheit des Elektromotors mit einem Lenkwinkelsensor verbunden und ausgebildet, die Rotorposition in Abhängigkeit eines von dem Lenkwinkelsensor erzeugten, einen Lenkwinkel der Lenkvorrichtung repräsentierenden Lenkwinkelsignals zu ermitteln. So kann vorteilhaft ein Lenkwinkelsensor zum Erfassen einer Lenkradstellung zusätzlich zum Ermitteln einer Rotorposition verarbeitet werden, insoweit ein Übersetzungsverhältnis zwischen einer Drehbewegung des Rotors und einer Drehbewegung eines Lenkrades des Fahrzeugs fest zugeordnet ist. Das Übersetzungsverhältnis beträgt beispielsweise 1 : 20, sodass eine Lenkradumdrehung 20 Rotorumdrehungen des Rotors des Elektromotors entspricht.

Die Rotorposition des Rotors kann somit vorteilhaft bei bekanntem Übersetzungsverhältnis zusätzlich zu den von dem Rotorpositionssensor erfassbaren Erfassungswinkeln des Rotors an weiteren Erfassungswinkeln, welche von den Erfassungswinkeln des Rotorpositionssensors verschieden sind, erfasst werden.

Bei der Erfindung ist der Rotor mit einer Motorwelle des Elektromotors drehfest verbunden und ausgebildet, in wenigstens einer Rotorposition von dem Lenkschloss gesperrt zu werden. Das Lenkschloss ist ausgebildet, mindestens mittelbar in die Motorwelle des Elektromotors einzugreifen und so das Lenkbewegen zu sperren oder freizugeben. So kann das Lenkrad vorteilhaft wirksam gegen ein Drehen gesperrt werden, weil aufgrund des Übersetzungsverhältnisses zwischen dem Lenkrad und dem Rotor des Elektromotors ein Drehen des Rotors mittels des Lenkrads ohnehin viel Kraft erfordert.

Bei der Erfindung weist das Lenkschloss ein entlang einer Translationsachse oder um eine Schwenkachse hin- und herbewegliches Sperrelement auf, wobei das Sperrelement angeordnet und ausgebildet ist, zum Sperren des Lenkens in den Antrieb formschlüssig und/oder kraftschlüssig einzugreifen.

Bevorzugt weist das Lenkschloss wenigstens eine mit dem Sperrelement wirkverbundene elektromagnetische Spule und einen im Wirkungsbereich der Spule hin- und herbeweglich gelagerten ferromagnetisch ausgebildeten Anker auf. Das Sperrelement ist mit dem Anker verbunden, so dass die Spule im bestromten Zustand das Sperrelement hin- oder herbewegen kann. Mittels des Ankers und der wenigstens einen Spule kann das Sperrelement vorteilhaft elektrisch betätigt werden.

In einer anderen Ausführungsform weist das Lenkschloss einen mit dem Sperrelement mittels eines Getriebes verbundenen Elektromotor zum Hin- und Herbewegen des Sperrelements auf.

Die Erfindung betrifft auch ein Kraftfahrzeug mit einer Lenkvorrichtung der vorbeschriebenen Art. Die Lenkvorrichtung weist einen Eingang für ein Betätigungssignal auf.

Das Kraftfahrzeug, insbesondere ein Steuergerät des Kraftfahrzeugs, ist bevorzugt ausgebildet, das Betätigungssignal in Abhängigkeit einer Benutzerinteraktion, beispielsweise eines Betätigens eines Zündschlosses oder einer Türverriegelung des Kraftfahrzeugs zu erzeugen und an die Lenkvorrichtung zum Sperren oder Freigeben des Lenkens zu senden. Denkbar ist auch ein von einer Alarmanlage des Kraftfahrzeugs erzeugtes Betätigungssignal, so dass das die Lenkung bei einem Einbruchversuch verriegelt werden kann.

So kann vorteilhaft bei einem Verschließen des Kraftfahrzeugs mittels einer zentralen Türverriegelung oder beim Ziehen eines Zündschlüssels das Lenkrad automatisch verriegelt werden. Bei einem Übersetzungsverhältnis von 1 zu 20 zwischen dem Lenkrad und dem Rotor wird dabei das Lenkrad um einen kleinen Winkel gedreht. Wenn der Rastring oder die Lochscheibe beispielsweise zehn in Umfangsrichtung verteilte Rastpositionen zum Eingreifen des Sperrelements aufweist, so wird der Rotor des Elektromotors von der Steuervorrichtung der Lenkvorrichtung maximal um 36 Grad gedreht, bis die nächstmögliche Rastposition zum Sperren erreicht wird. Wenn das Übersetzungsverhältnis zwischen der Rotordrehung und der Lenkraddrehung 20 zu 1 beträgt, so entspricht das einer Lenkraddrehung um weniger als 2 Grad. Ein Fahrer des Kraftfahrzeugs kann durch diese kleine Drehung vorteilhaft nicht verletzt werden, wenn er beispielsweise noch eine Hand oder einen Arm im Bereich des Lenkrades hält.
Figur 1 zeigt schematisch ein Ausführungsbeispiel für eine Lenkvorrichtung;
Figur 2 zeigt schematisch ein Ausführungsbeispiel für ein Zusammenwirken eines Lenkschlosses der in Figur 1 dargestellten Lenkvorrichtung mit einer Motorwelle;
Figur 3 zeigt schematisch Wirkeingriff zum mittelbaren Sperren einer Motorwelle durch ein Lenkschloss;
Figur 4 zeigt schematisch ein mittelbares Sperren einer Motorwelle mittels eines Rastrings;
Figur 5 zeigt einen Achsparallelen Antrieb mit einer elektrisch unterstützten Lenkvorrichtung mit einem Lenkschloss, welches ausgebildet ist, in ein Getriebe des Antriebs zum Sperren der Lenkvorrichtung insbesondere formschlüssig einzugreifen.

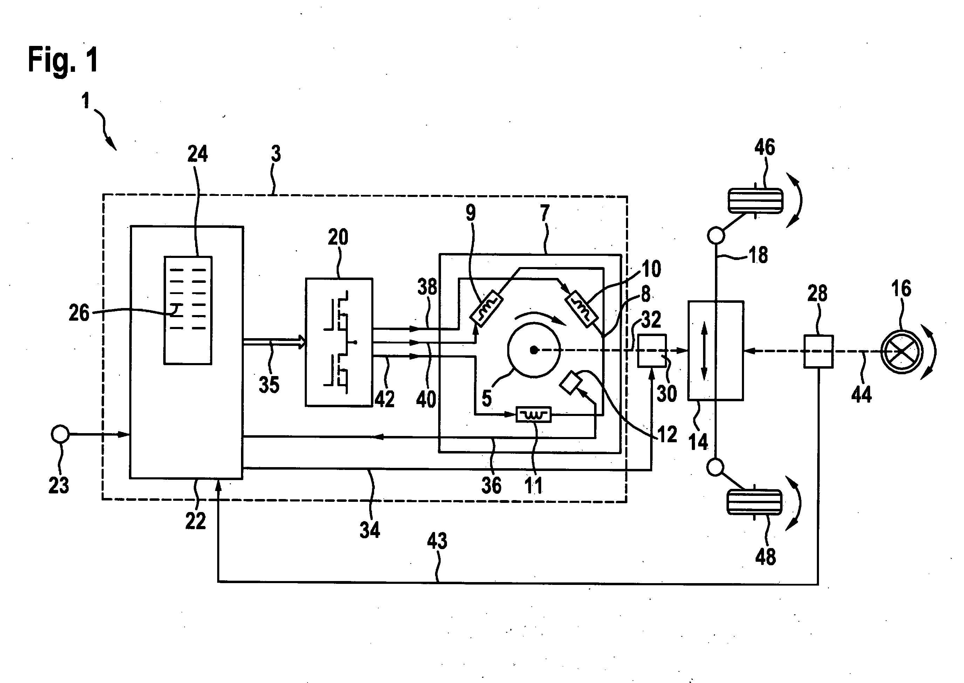

Figur 1 zeigt schematisch ein Ausführungsbeispiel für eine Lenkvorrichtung 1. Die Lenkvorrichtung 1 weist einen elektrischen Antrieb 3 auf. Der Antrieb 3 weist einen Elektromotor mit einem Rotor 5 und einen Stator 7 auf. Der Stator 7 weist in diesem Ausführungsbeispiel drei Statorspulen, nämlich die Statorspulen 9, 10 und 11 auf, welche jeweils mit einem Sternpunktanschluss 8 verbunden sind. Denkbar sind auch mehr als drei Statorspulen des Stators 7. Der Elektromotor weist auch einen Rotorpositionssensor 12 auf, welcher angeordnet und ausgebildet ist, wenigstens eine Rotorposition des Rotors 5 zu erfassen und ein die Rotorposition repräsentierendes Rotorpositionssignal zu erzeugen. Die Lenkvorrichtung 1 weist auch ein Lenkgetriebe 14 auf, welches mittels einer gestrichelt dargestellten Lenksäule 44 mit einem Lenkrad 16 verbunden ist. Das Lenkgetriebe 14 ist mit einer Spurstange 18 verbunden, welche hin- und herbeweglich gelagert ist und mit einem Vorderrad 46 und einem Vorderrad 48 wirkverbunden ist. Die Lenkvorrichtung 1 weist auch einen Lenkwinkelsensor 28 auf, welcher mit der Lenksäule 44 verbunden und ausgebildet ist, ein Lenkbewegen des Lenkrads 16 zu erfassen und ein das Lenkbewegen, insbesondere einen Lenkwinkel des Lenkbewegens repräsentierendes Lenkwinkelsignal zu erzeugen und dieses über eine Verbindungsleitung 43 ausgangsseitig auszugeben. Die Lenkvorrichtung 1 weist auch eine Steuereinheit 22 auf. Die Steuereinheit 22 ist beispielsweise durch einen Mikroprozessor oder einen Mikrocontroller oder ein FPGA (FPGA = Field-Programmable-Gate-Array) gebildet. Die Steuereinheit 22 weist einen Speicher 24 für wenigstens einen oder mehrere Rotorpositionsdatensätze auf. Der Rotorpositionsdatensatz 26 ist beispielhaft bezeichnet. Die Steuereinheit 22 ist eingangsseitig über eine Verbindungsleitung 36 mit dem Rotorpositionssensor 12 verbunden. Die Steuereinheit 22 ist ausgebildet, in Abhängigkeit des von dem Rotorpositionssensor 12 erzeugten Rotorpositionssignals den Stator 7, insbesondere die Statorspulen 9, 10 und 11 über eine Leistungsendstufe 20 zum Erzeugen eines magnetischen Drehfeldes anzusteuern und die Statorspulen mittels der Leistungsendstufe 20 zu bestromen. Dazu ist die Steuereinheit 22 ausgangsseitig über eine Verbindung 35 mit der Leistungsendstufe, und dort beispielsweise mit Gate-Anschlüssen von Halbleiterschaltern der Leistungsendstufe 20 verbunden. Die Leistungsendstufe 20 kann dazu beispielsweise für jede Statorspule eine Transistor-Halbbrücke als Halbleiterschalter aufweisen. Die Leistungsendstufe 20 ist ausgangsseitig über eine Verbindungsleitung 38 mit der Statorspule 10, über eine Verbindungsleitung 40 mit der Statorspule 9 und über eine Verbindungsleitung 42 mit der Statorspule 11 verbunden. Die Lenkvorrichtung 1 weist auch ein elektrisches Lenkschloss 30 auf. Das Lenkschloss 30 ist angeordnet und ausgebildet, in Abhängigkeit eines Steuersignals einen Antrieb, insbesondere eine mit dem Rotor 5 drehfest verbundene Motorwelle 32 formschlüssig oder zusätzlich kraftschlüssig einzugreifen und die Motorwelle 32 gegen ein Drehen zu sperren. Die Motorwelle 32 ist mit dem Lenkgetriebe 14, und dort mit der Spurstange 18 wirkverbunden. Das Lenkschloss 30 ist mittels einer Verbindungsleitung 34 mit der Steuereinheit 22 verbunden und kann von der Steuereinheit 22 das Steuersignal zum Sperren oder Freigeben der Motorwelle 32 empfangen.
Die Steuereinheit 22 weist einen Eingang 23 für ein Betätigungssignal auf. Die Steuereinheit 22 ist ausgebildet, in Abhängigkeit eines vom Eingang 23 empfangenen Betätigungssignals die Leistungsendstufe 20 über die Verbindung 35 zum Drehen des Rotors 5 in eine vorbestimmte Rotorposition anzusteuern, welche durch einen in dem Speicher 24 vorrätig gehaltenen Rotorpositionsdatensatz, beispielsweise dem Rotorpositionsdatensatz 26 repräsentiert ist. Die Steuereinheit 22 kann beispielsweise in Abhängigkeit des Lenkwinkelsignals des Lenkwinkelsensors 28 ein Rotorpositionssignal gemäß einem vorbestimmten Übersetzungsverhältnis ermitteln. Der Rotorpositionsdatensatz kann so eine genauere Rotorposition repräsentieren als ein nur in Abhängigkeit des von dem Rotorpositionssignal des Rotorpositionssensors erzeugter Rotorpositionsdatensatz.

Die Verarbeitungseinheit kann dazu in Abhängigkeit des von dem Rotorpositionssensor 12 empfangenen Rotorpositionssignals oder zusätzlich in Abhängigkeit des von Lenkwinkelsensor 28 empfangenen Lenkwinkelsignals eine nächstliegende Rotorposition der in dem Speicher 24 vorrätig gehaltenen Rotorpositionen auswählen und den Rotor durch Ansteuern der Leistungsendstufe 20 in die dem ausgewählten Rotorpositionsdatensatz entsprechende Rotorposition drehen. Die Steuereinheit 22 kann nach dem Drehen des Rotors in die zuvor ausgewählte Rotorposition ein Steuersignal zum Verriegeln des Antriebs, insbesondere der Motorwelle 32 erzeugen und dieses über die Verbindungsleitung 34 an das Lenkschloss 30 senden. Das Lenkschloss 30 kann in Abhängigkeit des von der Steuereinheit 22 empfangenen Steuersignals mittels eines Sperrelements in die Motorwelle 32 mindestens mittelbar eingreifen und die Motorwelle 32 so gegen ein Drehen verriegeln.

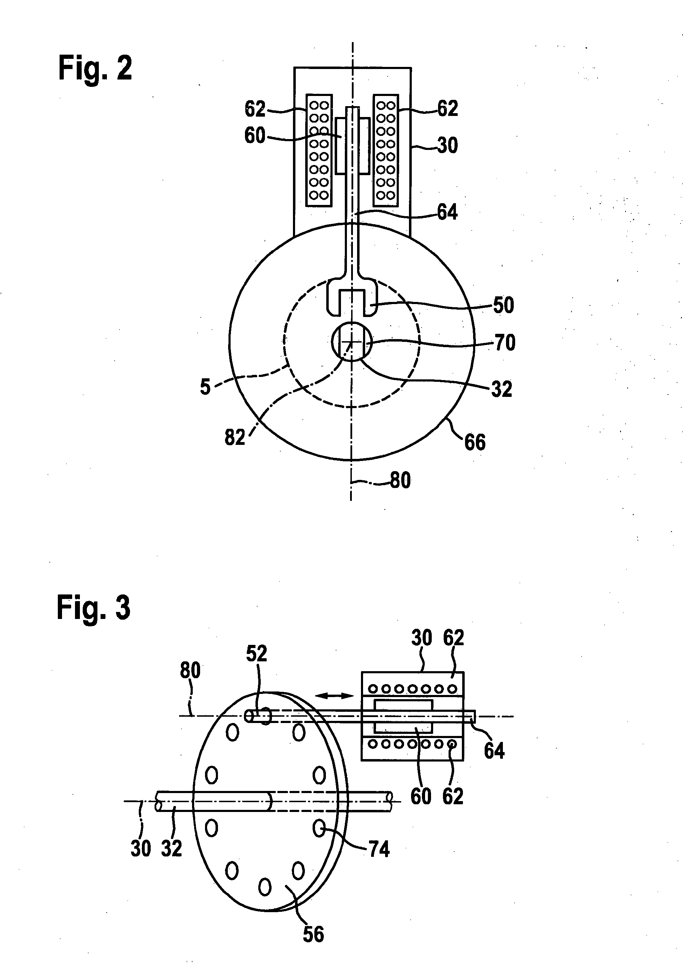

Beispiele zum formschlüssigen Eingreifen zum Verriegeln der Motorwelle 32 durch das Lenkschloss 30 sind in den Figuren 2, 3 und 4 dargestellt.

Der Eingang 23 kann beispielsweise mit einem Datenbus eines Kraftfahrzeugs verbunden sein. Der Datenbus ist beispielsweise ein CAN-Bus (CAN = Controller-Area-Network) oder ein LIN-Bus (Local-Interconnect-Network).

Figur 2 zeigt ein Ausführungsbeispiel für ein Zusammenwirken eines Lenkschlosses, insbesondere das in Figur 1 dargestellte Lenkschloss 30 mit einer Motorwelle, beispielsweise der in Figur 1 dargestellten Motorwelle 32. Das Lenkschloss 30 weist eine Spule 62 auf, welche einen Hohlraum umschließt, in dem ein Anker 60 entlang einer Translationsachse 80 hin- und herbeweglich angeordnet ist. Die Spule 62 ist ausgebildet, ein Magnetfeld zum Bewegen des Ankers 60 entlang der Translationsachse 80 zu erzeugen. Der Anker 60 ist mit einem Stift 64 verbunden, welcher im Bereich eines Endes ein Sperrelement 50 aufweist. Das Sperrelement 50 ist in diesem Ausführungsbeispiel als Gabel ausgebildet, wobei die Gabel ausgebildet ist, in eine entsprechende Aussparung 70 in der Motorwelle 32 einzugreifen und die Motorwelle 32 so gegen ein Drehen um eine Motorwellenlängsachse 32 zu sperren. Dargestellt ist auch ein Gehäuse 66 des Elektromotors, welches mit dem Lenkschloss 30, insbesondere dem Gehäuse des Lenkschlosses 30 verbunden ist.

Der in Figur 1 bereits dargestellte mit der Motorwelle 32 drehfest verbundene Rotor 5 ist in Figur 2 gestrichelt dargestellt.

Figur 3 zeigt einen Wirkeingriff zum mittelbaren Sperren der Motorwelle 32 durch das Lenkschloss 30. Dargestellt ist das Lenkschloss 30, welches die in Figur 2 bereits beschriebene Spule 62, den Anker 60 und den mit dem Anker 60 zusammen hin- und herbeweglich gelagerten Stift 64 umfasst. Das Ende des Stiftes 64 ist jedoch - anders als in Figur 2 dargestellt - zylinderförmig ausgebildet. Die Motorwellenlängsachse 32, um die der Rotor 5 zusammen mit der Motorwelle 32 drehbar gelagert ist, verläuft parallel zur Translationsachse 80, wobei der Anker 60 zusammen mit dem Stift 64 entlang der Translationsachse 80 hin- und herbeweglich gelagert ist.

Die Motorwelle 32 ist mit einer Lochscheibe 56 drehfest verbunden. Die Lochscheibe 56 erstreckt sich quer zur Motorwellenlängsachse 32 und weist wenigstens einen, mehrere oder zehn jeweils radial von der Motorwelle 32 beabstandete, hohlzylinderförmige Durchbrüche auf. Von den Durchbrüchen ist der Durchbruch 74 beispielhaft bezeichnet. Die Durchbrüche sind jeweils derart ausgebildet, dass der zylinderförmige Endabschnitt 52 des Stifts 64 in den Durchbruch hindurchbewegt werden kann. So kann das Lenkschloss 30 durch hin- und herbewegen des Ankers 60 den Endabschnitt 52 in einen Durchbruch der Lochscheibe 56 zum Sperren der Motorwelle 32 hinein, und zum Freigeben der Motorwelle 32 wieder hinausbewegen.

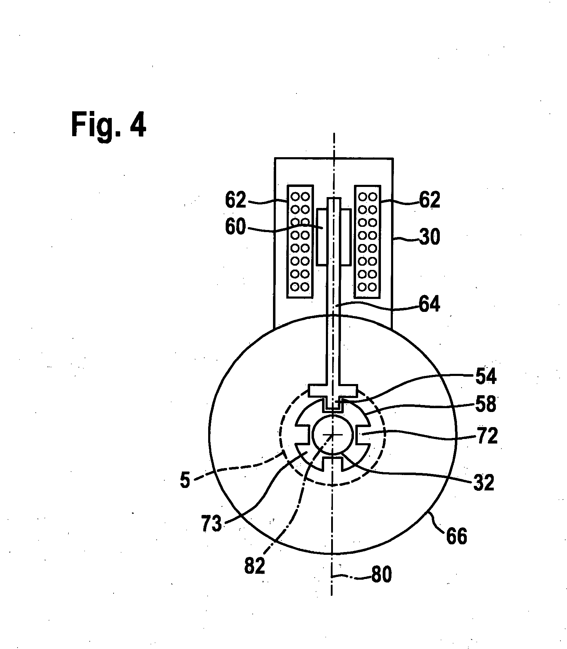

Figur 4 zeigt das Sperren der Motorwelle 32 mittels eines Rastrings 58, welcher mit der Motorwelle 32 drehfest verbunden ist und vier radial von der Motorwelle 32 beabstandete Aussparungen 72 aufweist. Zwischen zwei in Rotorumlaufrichtung zueinander unmittelbar benachbarten Aussparungen ist eine Nocke gebildet, von denen die Nocke 73 beispielhaft bezeichnet ist.

Dargestellt ist auch ein Motorgehäuse 66, welches mit dem in Figur 2 bereits beschriebenen Lenkschloss 30 verbunden ist. Das Lenkschloss 30 weist - wie in Figur 2 bereits beschrieben - die Spule 62, den Anker 60, den mit dem Anker 60 verbundenen und zusammen mit dem Anker 60 entlang der Translationsachse 80 hin- und herbeweglichen Stift 64 auf.

Anders als in den Figuren 2 und 3 dargestellt, weist der Stift 64 im Bereich eines Endes ein Sperrelement 54 auf, welches zum formschlüssigen Wirkeingriff mit einer Aussparung, beispielsweise der Aussparung 72 des Rastrings 58 ausgebildet ist. Die Translationsachse 80 verläuft in diesem Ausführungsbeispiel senkrecht zur Motorwellenlängsachse 82.

Der Rastring 58 weist vier entlang einer Rotorumlaufrichtung gleichmäßig zueinander beabstandete Aussparungen auf. Der Rotor 5, welcher in Figur 4 gestrichelt dargestellt ist, lässt sich somit in vier zueinander verschiedenen Rotorpositionen gegen ein Drehbewegen sperren.

Der Rastring 58 kann - anders als in Figur 4 dargestellt - auch mehr als vier Aussparungen aufweisen.

Das in den Figuren 1 bis 4 dargestellte Lenkschloss 30 weist einen Hubmagnet, gebildet aus der Spule 62 und dem Anker 60 zum Betätigen des Sperrelements auf. Denkbar ist anstelle eines Hubmagneten auch ein Motor mit einem Getriebe, der den Stift 64 hin- oder herbewegen kann.

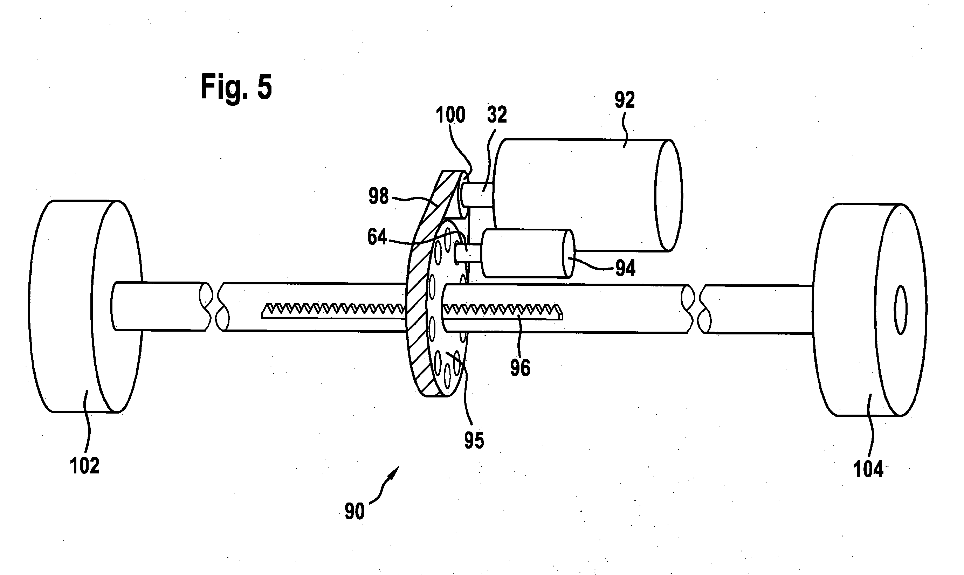

Figur 5 zeigt eine Lenkvorrichtung 90, die Bestandteil eines achsparallelen Antriebs ist. die Lenkvorrichtung 90 weist einen Elektromotor 92 mit einer Motorwelle 32 auf. Der Elektromotor ist mittels eines Getriebes mit einer Spurstange 96 wirkverbunden, wobei die Motorwelle 32 im Bereich eines Endes Ein Antriebsrad 100, insbesondere Antriebsritzel aufweist. Das Antriebsrad 100 ist über einen Riemen 98, insbesondere Zahnriemen, mit einem Getrieberad 95, insbesondere Zahnrad, verbunden. Das Getrieberad 95 ist mit der Spurstange beispielsweise über einen Kugeltrieb derart verbunden, dass die Spurstange in Abhängigkeit eines Drehens des Getrieberades 95 hin- oder herbewegt werden kann. Dazu kann die Spurstange beispielsweise eine Führungsschnecke aufweisen, in die wenigstens eine Kugel eingreift. Zusätzlich zu dem Getrieberad 95 kann eine Lenksäule im Bereich eines Endes mit der Spurstange verbunden sein und dort in eine Verzahnung eingreifen. Mit der Spurstange 96 sind Vorderräder 102 und 104 wirkverbunden. Das Getrieberad 95 weist in diesem Ausführungsbeispiel wie die Lochscheibe 56 in Figur 3 radial von der Spurstange 96 beabstandete Löcher, insbesondere Durchbrüche zum Eingriff eines Sperrelements des Lenkschlosses 94 auf. Das Lenkschloss 94 weist einen Stift 64 auf, dessen Endabschnitt in die Löcher eingreifen kann. Das Lenkschloss ist ausgebildet, den Stift 64 in Abhängigkeit eines Steuersignals hin- oder herzubewegen. Beispielsweise ist das Lenkschloss 94 wie das Lenkschloss 30 in Figur 3 ausgebildet. Denkbar ist anstelle eines Hubmagneten der Figur 3 auch ein Motor mit einem Getriebe, der den Stift 64 hin- oder herbewegen kann.

## Patentansprüche

1. Lenkvorrichtung (1) für ein Kraftfahrzeug, mit einem elektrischen Antrieb (3), welcher ausgebildet ist, ein Drehmoment zum Erleichtern eines Lenkens des Kraftfahrzeugs zu erzeugen, wobei
der elektrische Antrieb (3) einen Elektromotor (5, 7) mit einem Rotor (5) aufweist, und die Lenkvorrichtung (1) ein insbesondere elektrisches Lenkschloss (30, 94) aufweist, welches ausgebildet ist, in wenigstens einer Rotorposition des Rotors in den Antrieb (3) formschlüssig einzugreifen, wobei der Rotor (5) mit einer Motorwelle (32) des Elektromotors drehfest verbunden und ausgebildet ist, in wenigstens einer Rotorposition von dem Lenkschloss (30, 94) gesperrt zu werden und das Lenkschloss ausgebildet ist, mindestens mittelbar in die Motorwelle (32) des Elektromotors einzugreifen, und so ein Lenkbewegen zu sperren oder freizugeben, und die Lenkvorrichtung (1) eine Steuereinheit (22) aufweist, und einen Speicher (24) für wenigstens einen die Rotorposition repräsentierenden Rotorpositionsdatensatz (26) aufweist, und die Lenkvorrichtung (1) ausgebildet ist, zum Sperren der Lenkvorrichtung (1) mittels der Steuereinheit (22) den Elektromotor (5, 7) anzusteuern und den Rotor (5) in die Rotorposition zu drehen, die einem im Speicher vorrätiggehaltenen Rotorpositionsdatensatz (26) entspricht und den Rotor (5) dort zu sperren, **dadurch gekennzeichnet, dass** das Lenkschloss (30) ein entlang einer Translationsachse (80) oder um eine Schwenkachse hin- und herbewegliches Sperrelement (50, 52, 54) aufweist, wobei das Sperrelement (50, 52, 54) angeordnet und ausgebildet ist, zum Sperren des Lenkens in den Antrieb (3) formschlüssig und/oder kraftschlüssig einzugreifen, wobei das Sperrelement (50) als Gabel ausgebildet ist, wobei die Gabel ausgebildet ist, in eine entsprechende Aussparung (70) in der Motorwelle (32) einzugreifen und die Motorwelle (32) so gegen ein Drehen um eine Motorwellenlängsachse (82) zu sperren.

2. Lenkvorrichtung nach Anspruch 1,
**dadurch gekennzeichnet, dass**
der Elektromotor (5, 7, 20, 22) einen Rotorpositionssensor (12) aufweist, welcher ausgebildet ist, eine Winkelstellung des Rotors (5) zu erfassen und ein die Rotorposition repräsentierendes Rotorpositionssignal zu erzeugen, wobei der Elektromotor (5, 7, 20, 22) eine Steuereinheit (22) aufweist, welche ausgebildet ist, den Elektromotor, insbesondere einen Stator (7) des Elektromotors zum Erzeugen eines magnetischen Drehfeldes in Abhängigkeit des Rotorpositionssignals anzusteuern, wobei die Steuereinheit (22) der Lenkvorrichtung mit der Steuereinheit (22) des Elektromotors verbunden und ausgebildet ist, die Rotorposition zum Sperren wenigstens in Abhängigkeit des Rotorpositionssignals zu ermitteln.

3. Lenkvorrichtung (1) nach einem der vorhergehenden Ansprüche,
**dadurch gekennzeichnet, dass**
das Lenkschloss (30, 94) wenigstens eine mit dem Sperrelement (50, 52, 54) wirkverbundene elektromagnetische Spule (62) und einen im Wirkungsbereich der Spule hin- und herbeweglich gelagerten ferromagnetisch ausgebildeten Anker (60) aufweist, wobei das Sperrelement (50, 52, 54) mit dem Anker (16) verbunden ist, so dass die Spule (62) im bestromten Zustand das Sperrelement (50, 52, 54) hin- oder herbewegen kann.

4. Kraftfahrzeug mit einer Lenkvorrichtung nach einem der vorhergehenden Ansprüche,
**dadurch gekennzeichnet, dass**
die Lenkvorrichtung (1) einen Eingang (23) für ein Betätigungssignal aufweist und das Kraftfahrzeug, insbesondere ein Steuergerät des Kraftfahrzugs, ausgebildet ist, das Betätigungssignal in Abhängigkeit einer Benutzerinteraktion, insbesondere eines Betätigens eines Zündschlosses oder einer Türverriegelung des Kraftfahrzeugs, zu erzeugen und an die Lenkvorrichtung (1) zum Sperren oder Freigeben des Lenkens zu senden.

## Claims

1. Steering apparatus (1) for a motor vehicle, having an electric drive (3) which is designed to generate a torque for making it easier to steer the motor vehicle, wherein the electric drive (3) has an electric motor (5, 7) with a rotor (5), and the steering apparatus (1) has an, in particular electrical, steering lock (30, 94) which is designed to engage in an interlocking manner into the drive (3) in at least one rotor position of the rotor, wherein the rotor (5) is connected in a rotationally fixed manner to a motor shaft (32) of the electric motor and is designed to be blocked by the steering lock (30, 94) in at least one rotor position, and the steering lock is designed to engage at least indirectly into the motor shaft (32) of the electric motor and in this way to block or to allow a steering movement, and the steering apparatus (1) has a control unit (22), and has a memory (24) for at least one rotor position dataset (26) which represents the rotor position, and the steering apparatus (1) is designed to drive the electric motor (5, 7) by means of the control unit (22) in order to block the steering apparatus (1), and to rotate the rotor (5) to the rotor position which corresponds to a rotor position dataset (26) which is held in store in the memory, and there to block the rotor (5), **characterized in that** the steering lock (30) has a blocking element (50, 52, 54) which can move to and fro along a translation axis (80) or about a pivot axis, wherein the locking element (50, 52, 54) is arranged and designed to engage in an interlocking and/or force-fitting manner into the drive (3) in order to block steering, wherein the blocking element (50) is in the form of a fork, wherein the fork is designed to engage into a corresponding cutout (70) in the motor shaft (32) and to block the motor shaft (32) from rotating about a motor shaft longitudinal axis (82) in this way.

2. Steering apparatus according to Claim 1, **characterized in that** the electric motor (5, 7, 20, 22) has a rotation position sensor (12) which is designed to detect an angular position of the rotor (5) and to generate a rotation position signal which represents the rotor position, wherein the electric motor (5, 7, 20, 22) has a control unit (22) which is designed to drive the electric motor, in particular a stator (7) of the electric motor, in order to generate a rotating magnetic field depending on the rotor position signal, wherein the control unit (22) of the steering apparatus is connected to the control unit (22) of the electric motor and is designed to ascertain the rotor position for blocking at least depending on the rotor position signal.

3. Steering apparatus (1) according to either of the preceding claims, **characterized in that** the steering lock (30, 94) has at least one electromagnetic coil (62), which is operatively connected to the blocking element (50, 52, 54), and a ferromagnetic armature (60), which is mounted such that it can move to and fro in the operative region of the coil, wherein the blocking element (50, 52, 54) is connected to the armature (60), so that the coil (62), in the state in which current is applied to it, can move the blocking element (50, 52, 54) to and fro.

4. Motor vehicle having a steering apparatus according to one of the preceding claims, **characterized in that** the steering apparatus (1) has an input (23) for an operating signal, and the motor vehicle, in particular a control device of the motor vehicle, is designed to generate the operating signal depending on a user interaction, in particular operation of an ignition lock or a door lock of the motor vehicle, and to transmit the said operating signal to the steering apparatus (1) in order to block or allow steering.

## Revendications

1. Dispositif de direction (1) pour un véhicule automobile, comprenant un entraînement électrique (3) qui est réalisé pour générer un couple pour faciliter une direction du véhicule automobile, l'entraînement électrique (3) présentant un moteur électrique (5, 7) avec un rotor (5), et le dispositif de direction (1) présentant un blocage de direction notamment électrique (30, 94) qui est réalisé pour s'engager dans l'entraînement (3) par engagement par correspondance de formes dans au moins une position de rotor du rotor, le rotor (5) étant connecté de manière solidaire en rotation à un arbre de moteur (32) du moteur électrique et étant réalisé de manière à être verrouillé dans au moins une position de rotor par le blocage de direction (30, 94), et le blocage de direction étant réalisé de manière à s'engager au moins indirectement dans l'arbre de moteur (32) du moteur électrique et à verrouiller ou libérer ainsi un mouvement de direction, et le dispositif de direction (1) présentant une unité de commande (22) et une.mémoire (24) pour au moins un jeu de données de positions de rotor (26) représentant la position du rotor, et le dispositif de direction (1) étant réalisé, en vue du verrouillage du dispositif de direction (1) au moyen de l'unité de commande (22), pour commander le moteur électrique (5, 7) et pour faire tourner le rotor (5) dans la position de rotor qui correspond à un jeu de données de positions de rotor (26) conservé de manière disponible dans la mémoire et pour verrouiller le rotor (5) dans cette position, **caractérisé en ce que**
le blocage de direction (30) présente un élément de verrouillage (50, 52, 54) déplaçable suivant un mouvement de va-et-vient le long d'un axe de translation (80) ou autour d'un axe de pivotement, l'élément de verrouillage (50, 52, 54) étant disposé et réalisé, en vue du verrouillage de la direction, de manière à s'engager dans l'entraînement (3) par engagement par correspondance de formes et/ou par force, l'élément de verrouillage (50) étant réalisé sous forme de fourche, la fourche étant réalisée de manière à s'engager dans un évidement correspondant (70) dans l'arbre de moteur (32) et à verrouiller ainsi l'arbre de moteur (32) à l'encontre d'une rotation autour d'un axe longitudinal de l'arbre de moteur (82).

2. Dispositif de direction selon la revendication 1, **caractérisé en ce que**
le moteur électrique (5, 7, 20, 22) présente un capteur de position de rotor (12), lequel est réalisé de manière à détecter une position angulaire du rotor (5) et à générer un signal de position de rotor représentant la position du rotor, le moteur électrique (5, 7, 20, 22) présentant une unité de commande (22) qui est réalisée de manière à commander le moteur électrique, en particulier un stator (7) du moteur électrique pour générer un champ magnétique tournant en fonction du signal de position de rotor, l'unité de commande (22) du dispositif de direction étant connectée à l'unité de commande (22) du moteur électrique et étant réalisée de manière à déterminer la position du rotor en vue du verrouillage au moins en fonction du signal de position de rotor.

3. Dispositif de direction (1) selon l'une quelconque des revendications précédentes,
**caractérisé en ce que**
le blocage de direction (30, 94) présente au moins une bobine (62) électromagnétique en liaison fonctionnelle avec l'élément de verrouillage (50, 52, 54) et un induit (60) réalisé sous forme ferromagnétique et supporté de manière déplaçable suivant un mouvement de va-et-vient dans la zone d'action de la bobine, l'élément de verrouillage (50, 52, 54) étant connecté à l'induit (60) de telle sorte que la bobine (62) puisse déplacer l'élément de verrouillage (50, 52, 54) suivant un mouvement de va-et-vient dans l'état alimenté en courant.

4. Véhicule automobile comprenant un dispositif de direction selon l'une quelconque des revendications précédentes,
**caractérisé en ce que**
le dispositif de direction (1) présente une entrée (23) pour un signal d'actionnement et le véhicule automobile, en particulier un appareil de commande du véhicule automobile, est réalisé de manière à générer le signal d'actionnement en fonction d'une interaction de l'utilisateur, en particulier d'un actionnement d'une serrure de contact ou d'un verrouillage de porte du véhicule automobile, et à l'envoyer au dispositif de direction (1) en vue du verrouillage ou de la libération de la direction.
